## Europäisches Patentamt

## European Patent Office

## Office européen des brevets

(19)

(11) Veröffentlichungsnummer: **0 056 853**

**A1**

(12) # EUROPÄISCHE PATENTANMELDUNG

(21) Anmeldenummer: **81109953.0**

(22) Anmeldetag: **27.11.81**

(51) Int. Cl.³: **C 10 B 39/02**

(30) Priorität: **22.01.81 DE 3101940**

(43) Veröffentlichungstag der Anmeldung:
**04.08.82 Patentblatt 82/31**

(84) Benannte Vertragsstaaten:
**AT BE DE FR GB IT LU NL SE**

(71) Anmelder: **Krupp-Koppers GmbH
Moltkestrasse 29
D-4300 Essen 1(DE)**

(72) Erfinder: **Jokisch, Friedrich, Dr. Dipl.-Ing.
Henricistrasse 71
D-4300 Essen 1(DE)**

(72) Erfinder: **Heinrichs, Bernhard
Am Mühlenteich 5
D-4640 Wattenscheid(DE)**

(72) Erfinder: **Polenz, Joachim, Dipl.-Ing.
Weissenburgstrasse 9-11
D-4300 Essen 1(DE)**

(54) Verfahren zur Entstaubung und Kühlung von zur trockenen Kokskühlung verwendeten Kühlgasen.

(57) Die Erfindung betrifft ein Verfahren zur Entstaubung und Kühlung von zur trockenen Kokskühlung verwendeten und in einem geschlossenen Kreislauf geführten Kühlgasen, bei dem die aus dem der Kokskühlung dienenden Kühlschacht (1) austretenden heissen Kühlgase ohne vorherige Abkühlung und ohne Vorbehandlung in einen Zyklon (2) und daran anschliessend in einen Abhitzekessel (3) eingeleitet werden, worauf dieselben nach Passieren des Abhitzekessels (3) ohne weitere Nachbehandlung über ein Kühlgebläse (4) in den Kühlschacht (1) zurückgeleitet werden.

EP 0 056 853 A1

Essen, den 19. Januar 1981
N 4835/6     Dr. Ha/Wi.

KRUPP-KOPPERS GMBH, Moltkestrasse 29, 4300 Essen 1

Verfahren zur Entstaubung und Kühlung von zur trockenen Kokskühlung verwendeten Kühlgasen.

Die Erfindung betrifft ein Verfahren zur Entstaubung und Kühlung von zur trockenen Kokskühlung verwendeten und in einem geschlossenen Kreislauf geführten Kühlgasen, bei dem die aus dem der Kokskühlung dienenden Kühlschacht austretenden Kühlgase in einen Zyklon und daran anschliessend in einen Abhitzekessel eingeleitet werden.

Bei der trockenen Kokskühlung wird normalerweise der von oben in den Kühlschacht (Kokskühler) eingeleitete heisse Koks im Gegenstrom mit dem im Kühlschacht von unten nach oben aufsteigenden Kühlgasen behandelt. Bei dieser Arbeitsweise ist es einerseits praktisch unvermeidlich, dass die Kühlgase beim Durchströmen des heissen Kokses Koksstaubpartikel mitreissen. Da aber andererseits in der Regel diese Kühlgase in einem geschlossenen Kreislauf geführt und deshalb nach entsprechender Abkühlung wieder von unten in den Kühlschacht eingeleitet werden, ist es notwendig, dieselben nach dem Austritt aus dem Kühlschacht im ausreichenden Umfange zu entstauben. Würde man dieser Forderung nicht Rechnung tragen, so hätte dies zur Folge, dass sich der mitgerissene Koksstaub in den dem Kühlschacht nachgeschalteten Aggregaten, insbesondere im Abhitzekessel und Gebläse sowie in den Rohrleitungen niederschlagen würde, was natürlich zur Verstopfung und zum vorzeitigen Verschleiss der betroffenen Aggregate führen würde.

./.

Es ist deshalb bereits bekannt, die aus dem Kühlschacht austretenden heissen Kühlgase zunächst einer Vorentstaubung in einem sogenannten Prallabscheider zu unterwerfen, worauf die Gase nach dem
Passieren des Abhitzekessels, in dem sie eine entsprechende Abkühlung erfahren, zur Nachentstaubung in einen Zyklon eingeleitet werden. Eine derartige Arbeitsweise wird beispielsweise in der DE-OS
24 55 496 beschrieben.

Aus der DE-AS 26 18 654 ist ferner ein Verfahren zur Kühlung von
heissen Schüttgütern mit im Kreislauf geführten Kühlgasen bekannt,
bei dem die aus dem Kühlschacht austretenden heissen Kühlgase
zunächst mit bereits entstaubtem und abgekühltem Gas, das über
eine sogenannte Bypassleitung zugeführt wird, vermischt werden.
Durch diese Massnahme soll zunächst eine Abkühlung des aus dem
Kühlschacht austretenden heissen Gasstromes von ca. 1 000 - 900 °C
bis auf ca. 550 - 650 ° C erreicht werden. Ausserdem ist in der
Bypassleitung eine sogenannte Konditionierungseinrichtung vorgesehen, in der unliebsame Kühlgasbestandteile aus dem durch die
Bypassleitung geführten Gasstrom abgeschieden werden. Das bedeutet jedoch, dass das aus dem Kühlschacht austretende Kühlgas
nach der Zumischung des Gasstromes aus der Bypassleitung nicht
nur seine Temperatur sondern auch seine Zusammensetzung geändert hat. Erst nach dieser Vorbehandlung wird das Kühlgas zur
Teilentstaubung in eine Trockenreinigungseinrichtung eingeleitet,
die beispielsweise als Zyklon ausgebildet sein kann. Sodann erfolgt
die weitere Abkühlung in einem Abhitzekessel, worauf im unmittelbaren Anschluss daran der Kühlgasstrom noch durch einen Staubabscheider geleitet wird, dessen Entstaubungselemente zur weiteren

./.

Kühlung des Kühlgasstromes vorzugsweise mit Luft gekühlt werden.

Die vorstehenden Ausführungen lassen ganz klar erkennen, dass die bisher bekannten Methoden zur Entstaubung und Kühlung von Kühlgasen der genannten Art apparativ ausserordentlich aufwendig sind.

Der Erfindung liegt deshalb die Aufgabe zugrunde, diesen apparativen Aufwand möglichst weitgehend herabzusetzen, ohne dass dabei eine Verschlechterung des Entstaubungsgrades in Kauf genommen werden muss.

Dies wird bei einem Verfahren der eingangs genannten Art erfindungsgemäss dadurch erreicht, dass die aus dem Kühlschacht austretenden heissen Kühlgase ohne vorherige Abkühlung und ohne Vorbehandlung in den Zyklon eingeleitet werden und dass dieselben nach dem Passieren des Abhitzekessels ohne weitere Nachbehandlung über das Kühlgasgebläse in den Kühlschacht zurückgeleitet werden.

Beim erfindungsgemässen Verfahren werden die heissen Kühlgase in dem Zyklon, in den sie nach dem Austritt aus dem Kühlschacht ohne vorherige Abkühlung in einer besonderen Kühlstufe eingeleitet werden, bis auf einen Staubgehalt von $< 0,5\,\text{g/Nm}^3$ Gas entstaubt. Selbstverständlich können hierbei anstelle eines Zyklones auch zwei oder mehrere parallel- bzw. hintereinandergeschaltete Zyklone zur Anwendung gelangen.

Im Gegensatz zu den bekannten Arbeitsweisen ist bei Einhaltung des vorstehend angegebenen Entstaubungsgrades eine Nachentstaubung

./.

der Kühlgase nach dem Passieren des Abhitzekessels nicht mehr erforderlich, weshalb beim erfindungsgemässen Verfahren eine zweite Behandlungsstufe zur Entstaubung der Kühlgase in Fortfall kommen kann.

Im Gegensatz zu der Arbeitsweise nach der DE-AS 26 18 654, bei der zwar der Zyklon auch vor dem Arbeitskessel angeordnet ist, wird beim erfindungsgemässen Verfahren vor dem Einleiten des Kühlgasstromes in den Zyklon auch keine Abkühlung und Vorbehandlung desselben vorgenommen.

Bei den zum Stande der Technik gehörenden Verfahren ist man offensichtlich davon ausgegangen, dass der Einsatz von Zyklonen mit hohen Staubabscheidungsgraden für den genannten Zweck nur bei niedrigen Temperaturen möglich ist. Demgegenüber wurde nun gefunden, dass es durchaus möglich ist, die aus dem Kühlschacht austretenden heissen Kühlgase unmittelbar, das heisst ohne vorherige Abkühlung in einer besonderen Kühl- bzw. Behandlungsstufe, in einen Zyklon einzuleiten. Voraussetzung hierfür ist natürlich, dass dieser Zyklon bezüglich seiner Baumaterialien den zu erwartenden Temperaturbedingungen, bei denen die Gastemperaturen etwa zwischen 1000 ° C und 800 ° C liegen, angepasst ist und sich gleichzeitig durch einen so guten Wirkungsgrad auszeichnet, dass die heissen Kühlgase in ihm bis auf einen Staubgehalt von $< 0,5 \ g/Nm^3$ Gas entstaubt werden können. Man bezeichnet deshalb derartige Zyklone vielfach auch als Heissgaszyklone.

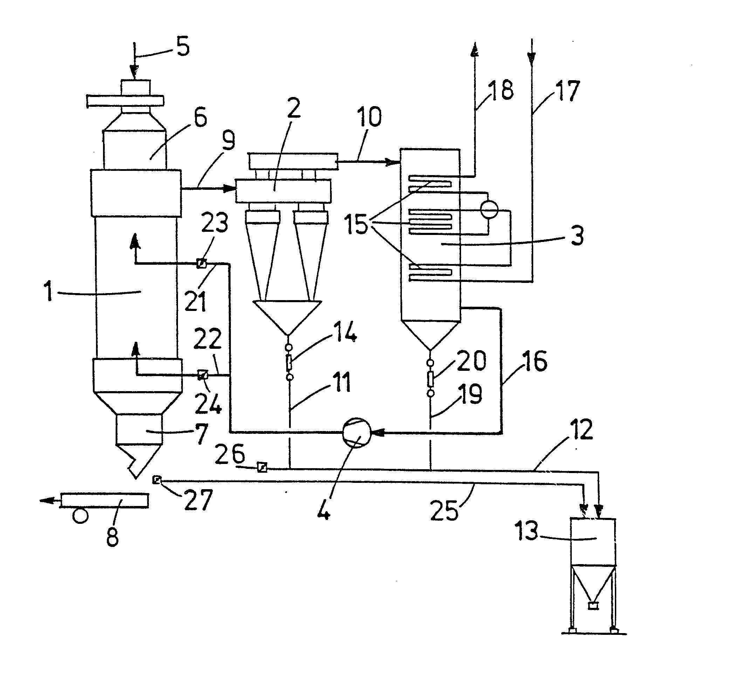

Weitere Einzelheiten des erfindungsgemässen Verfahrens sollen nachfolgend an Hand des in der Abbildung dargestellten Fliessschemas erläutert werden, welches gleichzeitig der Beschreibung eines Ausführungsbeispieles dient. Selbstverständlich sind in dem Fliess-Schema nur die für diesen Zweck unbedingt notwendigen Anlagenteile dargestellt, während sonstige Nebeneinrichtungen, wie beispielsweise die Einrichtungen zur Aufgabe und zum Austragen des Kokses sowie die konstruktiven Details des Kühlschachtes nicht aufgeführt werden.

Bei dem in der Abbildung dargestellten Fliess-Schema wird der zu kühlende, von der Koksofenbatterie kommende heisse Koks in einer Menge von 60 t/h über die Koksaufgabe 5 von oben in den Kühlschacht 1 aufgegeben. Der Koks passiert dabei zunächst die Vorkammer 6, die mit dem Kühlschacht 1 eine bauliche Einheit bildet. Beim Passieren des Kühlschachtes 1 kommt der Koks mit den im Gegenstrom von unten nach oben aufsteigenden Kühlgasen in Berührung und wird dabei von ca. 1.000° C bis auf ca. 200° C abgekühlt. Mit der zuletzt genannten Temperatur wird deshalb der Koks am Fusse des Kühlschachtes 1 über die Austragsvorrichtung 7 abgezogen, wobei er auf die Fördereinrichtung 8 fällt, von wo er seiner weiteren Verwendung bzw. Behandlung zugeführt wird.

Die im Kühlschacht 1 aufgestiegenen heissen Kühlgase werden in einer Menge von ca. 90 000 $Nm^3$/h über die Leitung 9 abgezogen. Sie weisen dabei eine Temperatur von ca. 800° C auf und enthalten ca. 10 g/$Nm^3$ staubförmige Verunreinigungen, wobei es sich in erster Linie um mitgerissenen Koksstaub handelt. Über die Leitung 9 wer-

./.

den die heissen Kühlgase unmittelbar in den Zyklon 2 eingeleitet. Dieser ist selbstverständlich als sogenannter Heissgaszyklon ausgebildet, d.h. hinsichtlich seiner Baumaterialien den zu erwartenden Temperaturbedingungen angepasst. Wie aus der Abbildung ersichtlich ist, können in dieser Verfahrensstufe zwei oder mehr Zyklone parallel- bzw. hintereinandergeschaltet sein. Die heissen Kühlgase werden hierbei bis auf einen Staubgehalt von ca. $< 0,5$ g pro $Nm^3$ entstaubt und können danach über die Leitung 10 in den Abhitzekessel 3 eingeleitet werden. Der abgeschiedene Staub wird aus dem Unterteil des Zyklons 2 über die Leitung 11 abgezogen, die in die zum Sammelbehälter 13 führende Leitung 12 mündet. In der Leitung 11 kann dabei die Fördereinrichtung 14 vorgesehen sein.

Die heissen Kühlgase treten aus der Leitung 10 mit einer Temperatur zwischen 700 und 800 ° C in den Oberteil des Abhitzekessels 3 ein und werden an den Rohrschlangen 15 soweit abgekühlt, dass sie den Abhitzekessel 3 mit einer Temperatur von ca. 170 ° C über die Leitung 16 verlassen können. Die Speisewasserzufuhr zum Abhitzekessel 3 erfolgt über die Leitung 17, während der erzeugte Dampf über die Leitung 18 abgezogen wird. Etwa aus den Kühlgasen im Abhitzekessel 3 abgeschiedener Staub sammelt sich im Unterteil desselben und kann über die zur Leitung 12 führende Leitung 19 abgezogen werden. Die zuletzt genannte Leitung kann wiederum eine Fördereinrichtung 20 aufweisen.

Die Leitung 16 führt vom Abhitzekessel 3 direkt zum Kühlgasgebläse 4, in dem die abgekühlten und entstaubten Kühlgase die für die Wiedereinleitung in den Kühlschacht 1 notwendige Verdichtung erfahren.

.∕.

Die Wiedereinleitung erfolgt über die Leitungen 21 und 22, wobei die Kühlgase in zwei Teilströme aufgeteilt werden, von denen der eine Teilstrom über die Leitung 22 in den Unterteil des Kühlschachtes 1 eingeleitet wird, während der zweite Teilstrom in einen Bereich des Kühlschachtes 1 eingeleitet wird, in dem der zu kühlende Koks eine Temperatur von ca. 400 - 600 ° C aufweist. Die Aufteilung der beiden Teilströme kann durch die Klappen 23 und 24 einreguliert werden. Im vorliegenden Fälle werden etwa 70 Vol.-% der Kühlgasmenge über die Leitung 22 in den unteren Teil des Kühlschachtes 1 eingeleitet, während der Rest über die Leitung 21 in den mittleren Teil des Kühlschachtes 1 eingeleitet wird.

Etwa beim Austragen des gekühlten Kokses aus dem Kühlschacht 1 anfallender Staub bzw. das anfallende Unterkorn können durch eine in der Abbildung nicht dargestellte Siebeinrichtung abgetrennt werden und gelangen über die Leitung 25 ebenfalls in den Sammelbehälter 13, von wo der gesammelte Koksstaub seiner weiteren Verwendung, z.B. zur Kesselfeuerung, zugeführt wird. Die Ventile 26 und 27 an den Leitungen 12 und 25 deuten an, dass diese Leitungen zum Transport des in ihnen fliessenden Staubes mit einem gasförmigen Fördermedium beaufschlagt werden können.

Patentansprüche :

1.) Verfahren zur Entstaubung un Kühlung von zur trockenen
Kokskühlung verwendeten und in einem geschlossenen Kreislauf geführten Kühlgasen, bei dem die aus dem der Kokskühlung dienenden Kühlschacht austretenden Kühlgase in einen
Zyklon und daran anschliessend in einen Abhitzekessel eingeleitet werden, dadurch gekennzeichnet, dass die aus dem
Kühlschacht (1) austretenden heissen Kühlgase ohne vorherige
Abkühlung und ohne Vorbehandlung in den Zyklon (2) eingeleitet werden und dass dieselben nach dem Passieren des Abhitzekessels (3) ohne weitere Nachbehandlung über das Kühlgebläse (4) in den Kühlschacht (1) zurückgeleitet werden.

2.) Verfahren nach Anspruch 1, dadurch gekennzeichnet, dass
die heissen Kühlgase im Zyklon (2) bis auf einen Staubgehalt
von $< 0,5$ g/Nm$^3$ Gas entstaubt werden.

3.) Verfahren nach den Ansprüchen 1 und 2, dadurch gekennzeichnet, dass für die Entstaubung der aus dem Kühlschacht (1) austretenden heissen Kühlgase zwei oder mehrere parallel- bzw.
hintereinandergeschaltete Zyklone (2) vorgesehen sind.

./.

**Europäisches Patentamt**

**EUROPÄISCHER RECHERCHENBERICHT**

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe. soweit erforderlich. der maßgeblichen Teile | betrifft Anspruch | C 10 B 39/02 |
| X | <u>DE - A1 - 2 448 904</u> (WAAGNER-BIRO AG) <br> * Ansprüche 1, 5, 6; Fig. 1 * <br> -- | 1,3 | |
| X | <u>DE - C - 493 790</u> (KOHLENSCHEIDUNGS-GMBH) <br> * Anspruch; Abbildungen 1, 2 * <br> -- | 1 | |
| A | Patent Abstracts of Japan <br> Band 2, Nr. 76, 16. Juni 1978 <br> Seite 854C78 <br> & JP - A - 53 - 30604 <br> -- | 1 | **RECHERCHIERTE SACHGEBIETE (Int. Cl.³)** |
| A | <u>DE - C - 1 082 607</u> (METALLGESELLSCHAFT AG et al.) <br> * Anspruch 1; Spalte 3, Zeile 46 bis <br> Spalte 4, Zeile 16 * <br> -- | 1 | B 01 D 45/12 <br> C 10 B 39/00 <br> C 10 J 3/84 <br> C 10 J 3/86 <br> C 10 K 1/02 |
| A | Patent Abstracts of Japan <br> Band 2, Nr. 155, 26. Dezember 1978 <br> Seite 3735C78 <br> & JP - A - 53 - 120703 <br> -- | | |
| D,A | <u>DE - A1 - 2 455 496</u> (KOPPERS CO.) <br> -- | | **KATEGORIE DER GENANNTEN DOKUMENTE** |
| D,A | <u>DE - B2 - 2 618 654</u> (WAAGNER-BIRO AG) <br> ---- | | X von besonderer Bedeutung allein betrachtet <br> Y von besonderer Bedeutung in Verbindung mit einer anderen Veröffentlichung derselben Kategorie <br> A technologischer Hintergrund <br> O nichtschriftliche Offenbarung <br> P Zwischenliteratur <br> T der Erfindung zugrunde liegende Theorien oder Grundsatze <br> E: älteres Patentdokument das jedoch erst am oder nach dem Anmeldedatum veröffentlicht worden ist <br> D: in der Anmeldung angeführtes Dokument <br> L. aus andern Gründen angeführtes Dokument |

| | | &. Mitglied der gleichen Patentfamilie. übereinstimmendes Dokument |
|---|---|---|
| X | Der vorliegende Recherchenbericht wurde für alle Patentansprüche erstellt | |

| Recherchenort | Abschlußdatum der Recherche | Prüfer |
|---|---|---|
| Berlin | 17-02-1982 | BERTRAM |

EPA form 1503.1 06.78